(19) Europäisches Patentamt
European Patent Office
Office européen des brevets

(11) **EP 3 019 030 B1**

(12) **EUROPEAN PATENT SPECIFICATION**

(45) Date of publication and mention
of the grant of the patent:
**02.01.2019 Bulletin 2019/01**

(51) Int Cl.:
***A23L 5/20*** *(2016.01)*    ***A23B 9/18*** *(2006.01)*

(21) Application number: **14739528.9**

(22) Date of filing: **09.07.2014**

(86) International application number:
**PCT/GB2014/052083**

(87) International publication number:
**WO 2015/004448 (15.01.2015 Gazette 2015/02)**

(54) **TREATMENT OF LIQUID GLUTEN SLURRY TO REDUCE OR REMOVE AFLATOXIN**

BEHANDLUNG VON FLÜSSIGEM GLUTENSCHLAMM ZUR AFLATOXIN-REDUZIERUNG ODER -ENTFERNUNG

TRAITEMENT D'UNE PÂTE DE GLUTEN LIQUIDE POUR RÉDUIRE OU ÉLIMINER L'AFLATOXINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.07.2013 US 201361844583 P**
**02.09.2013 GB 201315557**

(43) Date of publication of application:
**18.05.2016 Bulletin 2016/20**

(73) Proprietor: **Tate & Lyle Ingredients Americas LLC**
**Hoffmann Estates IL 60192 (US)**

(72) Inventors:
 • **ARMENTROUT, Richard W.**
**Hoffman Estates, Illinois 60192 (US)**
 • **MATTHEW, Susan**
**Hoffman Estates, Illinois 60192 (US)**
 • **MCINTYRE, Timothy**
**Hoffman Estates, Illinois 60192 (US)**
 • **FARLEY, Edward**
**Hoffman Estates, Illinois 60192 (US)**

(74) Representative: **Arends, William Gerrit**
**Marks & Clerk LLP**
**90 Long Acre**
**London WC2E 9RA (GB)**

(56) References cited:
**WO-A1-02/05665      WO-A2-2008/084407**
**US-A- 3 592 641**

 • **MCKENZIE K S ET AL: "Oxidative degradation and detoxification of mycotoxins using a novel source of ozone", FOOD AND CHEMICAL TOXICOLOGY, PERGAMON, GB, vol. 35, no. 8, 1 August 1997 (1997-08-01) , pages 807-820, XP002551009, ISSN: 0278-6915, DOI: 10.1016/S0278-6915(97)00052-5 [retrieved on 1997-12-17]**

**Description**

This invention relates to the production of grain gluten or corn gluten slurry using ozone gas.

The listing or discussion of an apparently prior-published document in this specification should not necessarily be taken as an acknowledgement that the document is part of the state of the art or is common general knowledge.

Aflatoxins are a class of fungal toxins produced by species of *Aspergillus* fungi that sporadically contaminate corn (maize) and other types of crops during production, harvest, storage or processing. Contamination of corn with aflatoxin has been recognized since the 1970s and is a sporadic but re-occurring problem related to moisture, heat, and other growth factors in the field and during storage. Following the worst drought in half a century in 2012, aflatoxin contamination of corn emerged in unusually high levels in the heart of the U.S. Corn Belt. Aflatoxins have been demonstrated to be potent carcinogens that can cause severe liver diseases (e.g. liver cancer). Wet-mill processing of contaminated corn concentrates this toxin in the gluten fractions, reducing the value of this high-protein livestock feed product.

Various strategies for removing aflatoxins from foodstuffs and the like have been used. These include solvent extraction (e.g. US 4,747,979, US 4,062,984, US 4,055,674, US 6,058,940 and US 7,273,628), alkali treatment (e.g. US 4,035 518, RE30,386 and US 5,082,679), treatment with minerals and/or clays (e.g. US 8,221,807, US 6,045,834, US 5,149,549 and US 5,639,492), the use of microorganisms, such as Japanese. B. *subtilis* (e.g. US 4,931,398 and US 5,549,890), genetic modification (e.g. US 5,844,121 and US 5,942,661), UV irradiation (e.g. US 7,452,561), the use of antibodies (e.g. US 7,494,589), reactive nanoparticles as destructive adsorbents for aflatoxins (e.g. US 6,417,423 and US 6,653,519), DNA shuffling to produce nucleic acids for aflatoxin detoxification (e.g. US 6,500,639) and the use of enzymes that metabolise aflatoxins (e.g. US 7,671,242 and US 7,695,751). US 3,592,641 relates to a process for lowering the aflatoxin level in peanut and cottonseed meals contaminated with aflatoxin. In this process, the contaminated cottonseed meal (6.6% moisture content) and peanut meals (7.2% moisture content), are hydrated to a level of 22% and 30% respectively. The hydrated meals were contacted with ozone gas in a covered vessel at atmospheric pressure and heated to temperatures of 75 °C and 100 °C. Aflatoxin removal was significantly greater at 100 °C than at 75 °C. A further method that has been investigated is the use of ozone to remove aflatoxins from foodstuffs.

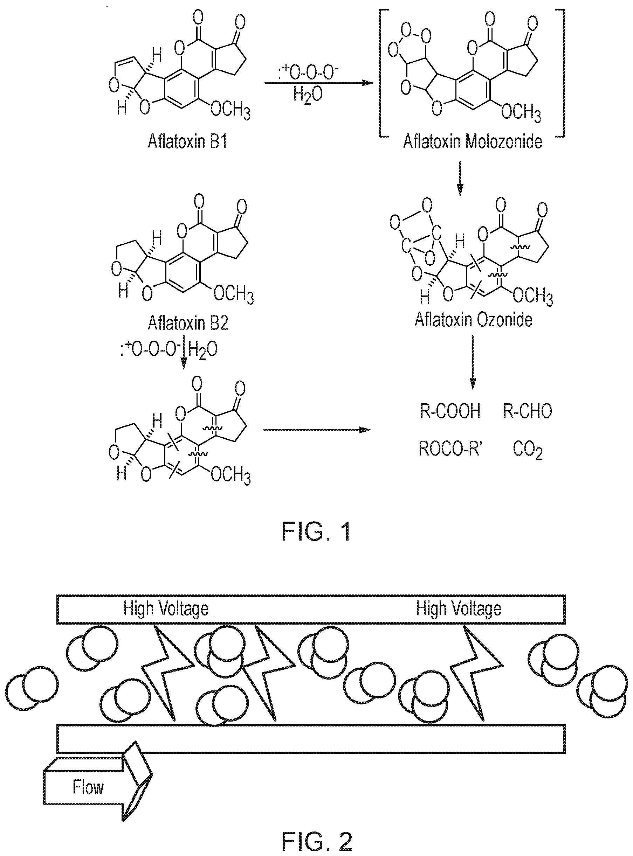

Ozone treatment can either completely degrade mycotoxins or cause chemical modifications, reducing their biological activity. In a model system, ozone reacts across the 8,9 double bond of the furan ring of aflatoxin B1 ("AFB1") through electrophilic attack, causing the formation of primary ozonides followed by rearrangement into monozonide derivatives such as aldehydes, ketones and organic acids, as shown in Figure 1. It is noted that aflatoxin B1 is generally considered to be the most toxic of the known aflatoxins (Boutrif, E. (1998) "Prevention of aflatoxin in pistachios" Food, nutrition and agriculture 21).

There are several methods for the production of ozone, e.g. electrical discharge in $O_2$ or air (e.g. a coronal discharge), electrolysis of water, or thermal, photochemical or radiochemical methods.

Ozone ($O_3$) is a powerful oxidizing agent and there have been several reports where ozonolysis has been used in the removal of toxins from foodstuffs. For example, gaseous ozone is disclosed for food disinfection in US 6,066,348, US 6,294,211, US 6,120,822, US 5,431,939, US 4,549,477, US 4,376,130, US 5,213,759 and US 5,011,699. While ozone is commonly used to treat municipal water, it is significantly more stable in the air (gaseous ozone) than in solution. Nevertheless, aqueous ozone has also been disclosed for the sanitization of discrete food products (particularly poultry carcases) in US 5,227,184, US 4,849,237 and US 5,087,466, but does not appear to have been used with particulate matter suspended in a liquid.

More particularly, there are a number of early reports suggesting that ozone can be used to reduce or eradicate aflatoxins from dry foodstuffs (e.g. Dollear et al. Journal of the American Oil Chemists' Society 1968, 45(12), pp 862-865). More recently, it has been suggested in US 7,943,804 (US application publication No. 2010/0240933) that the use of gaseous ozone for about 96 hours can be beneficial in enhancing lutein extraction from aflatoxin-free corn and for some batches of alfalfa. Although mentioning aflatoxin-free corn, the same patent suggests that ozonation will substantially decrease any aflatoxin in the plant source (e.g. the corn kernels). Further recent patent applications (international patent applications WO2011/087853 and WO2011/087856) relate to the use of a flow of ozone gas to treat corn kernels in a dry storage container.

Similar claims have been made by McDonough et al. in the Journal of Stored Products Research 47 (2011) 249 e254, where it is suggested that the exposure of corn to a high gaseous concentration (47,800 parts per million (ppm)) of ozone in a continuous flow conveyor for 1.8 minutes may be useful in the reduction of aflatoxins. However, the reduction in aflatoxins was described in the article as not sufficient to be of commercial value.

Gaseous ozone has also been considered by Prudente Jr. et al. in the Journal of Food Science 67(8) 2002, 2866, where the study suggested that 10 to 12 wt% of gaseous ozone was sufficient to reduce aflatoxin levels by 92% in corn kernels. However, the study showed that the ozonation had a significant effect on the fatty acids of contaminated corn.

With the above in mind, the present inventors have devised an improved method for the decontamination of grains (e.g. corn) that is especially suitable for grains contaminated with aflatoxins.

WO 02/05665 A1 relates to the use of a radical gas for reducing or eliminating undesired chemical substances, harmful substances, and/or pests, which are contained in a material, on the top surface of a material or are released from a material.

WO 2008/084407 A2 relates to a method of decontaminating grain, nut, or seed products and a method for conditioning grain in a milling process for decontamination. In the decontamination and/or conditioning method, the grain, nut, or seed product is contacted with an aqueous anolyte product which can be undiluted or can be diluted with non-activated water.

McKenzie, K.S. et al., Food and Chemical Toxicology, vol. 35, no. 8, 1 August 1997, pages 807-820 relates to oxidative degradation and detoxification of mycotoxins using a source of ozone.

US 3 592 641 A relates to a process for lowering the aflatoxin level in peanut and cottonseed meals contaminated with aflatoxin.

In a first aspect, the present invention provides a method for reducing aflatoxin in a grain gluten or corn gluten, the method comprising the steps of:

(a) wet-milling aflatoxin contaminated grains or corn kernels to produce grain gluten or corn gluten, and preparing a grain gluten or corn gluten slurry; and
(b) treating the grain gluten or corn gluten slurry with ozone;

wherein the temperature of the grain gluten or corn gluten slurry in step (b) is from 10 to 60°C;
wherein the grain gluten or corn gluten slurry contains from 10 wt% to 20 wt% dry solids per litre; and
wherein the grain gluten or corn gluten slurry is prepared from a wet-milled fraction of grain or corn gluten.

Various advantageous embodiments and further developments of the process according to the invention are set out in the dependent claims.

In an embodiment of the invention, the method is a method for reducing aflatoxin in a corn gluten, the method comprising the steps of:

(a) wet-milling aflatoxin contaminated corn kernels to produce corn gluten, and preparing a corn gluten slurry; and
(b) treating the corn gluten slurry with ozone;

wherein the temperature of the corn gluten slurry in step (b) is from 10 to 60°C;
wherein the corn gluten slurry contains from 10 wt% to 20 wt% dry solids per litre; and
wherein the corn gluten slurry is prepared from a wet-milled fraction of grain or corn gluten.

In an embodiment of the invention, grain gluten is a gluten derived from a grain selected from the group consisting of oats, rice, or more particularly barley, wheat, spelt and rye.

In an embodiment of the invention, the ozone treatment of step (b) is effected by bubbling ozone gas through the grain gluten or, more particularly, corn gluten slurry.

In further embodiments of the invention, the method further comprises preparing grain gluten or, more particularly, corn gluten from the treated grain gluten or corn gluten slurry.

In yet further embodiments of the invention, the resulting (*i.e.* after treatment with ozone) grain gluten or, more particularly, corn gluten slurry has fewer than 300 parts per billion aflatoxin, as measured by the content of aflatoxin B1 using LC/MS (e.g. fewer than 200 ppb, such as fewer than 100 ppb). In certain embodiments of the invention, the resulting grain gluten or, more particularly, corn gluten slurry has fewer than 20 parts per billion aflatoxin, as measured by the content of aflatoxin B1 using LC/MS.

As indicated above, the grain gluten or, more particularly, corn gluten slurry contains from 10 wt% to 20 wt% dry solids per litre (e.g. about 15 wt% dry solids per litre).

As indicated above, step (a) includes wet-milling aflatoxin contaminated grains or corn kernels to produce grain gluten or corn gluten prior to preparing the grain gluten or corn gluten slurry (*i.e.* the grain gluten or corn gluten used to prepare the slurry in step (a) is prepared by wet-milling aflatoxin contaminated grains or corn kernels). Preferably, the grain gluten or corn gluten prepared by wet-milling is not dried prior to preparing the grain gluten or corn gluten slurry in step (a). The grain gluten or, more particularly, corn gluten slurry is prepared from a wet-milled fraction of grain gluten or corn gluten.

In yet a further embodiment of the invention, the total ozone dosage is up to about 6.6 g ozone per litre of grain gluten or, more particularly, corn gluten slurry (e.g. about 3.3 g ozone per litre of grain gluten corn gluten slurry, such as about 2.80 g ozone per litre of grain gluten or corn gluten slurry, for example from 1.80 g to 2.50 g ozone per litre of grain gluten or corn gluten slurry or from 1.50 g to about 2.80 g ozone per litre of grain gluten or corn gluten slurry).

In yet further embodiments of the invention, the method further comprises the addition, as required, of a liquid or a dry antifoam agent in step (b) (e.g. a liquid antifoam agent).

In still yet further embodiments, the temperature of step (b) is from about 10 to about 30°C (e.g. from about 20 to 28 °C, such as about 27°C).

In yet still further embodiments, the grain gluten or, more particularly, corn gluten slurry is contaminated with greater than or equal to 20 parts per billion (ppb) aflatoxin (e.g. from about 30 ppb to about 100 ppb aflatoxin, such as from 40 to 50 ppb aflatoxin). For example, the dry solids of the grain gluten or, more particularly, corn gluten slurry are contaminated with from about 100 to 500 ppb aflatoxin.

In embodiments of the invention, the corn gluten prepared in step (b) contains less than 1 ppb aflatoxin.

In embodiments of the invention, the grain gluten prepared in step (b) contains less than 1 ppb aflatoxin.

In yet still further embodiments of the invention, the treatment of the grain gluten or, more particularly, corn gluten slurry with ozone in step (b) lasts from about 15 minutes to 3 hours (e.g. from about 30 minutes to 2 hours).

In other embodiments, during step (b) liquid or dry (*i.e.* solid) antifoaming agents are added as required to prevent foaming during the addition of gas to the grain gluten or corn gluten slurry.

In embodiments of the invention, the liquid component of the grain gluten or, more particularly, corn gluten slurry is water.

The invention will be described in more detail below, with the aid of the following figures.

Figure 1 depicts the postulated reaction mechanism for the ozonolysis of aflatoxin B1.

Figure 2 depicts oxygen flowing between an electrode and cathode produces ozone from a corona discharge.

Figure 3 depicts ozone concentration (%) against oxygen flow (litres per minute). This depiction shows that as the oxygen flow goes up, the concentration of ozone in the oxygen decreases.

Figure 4 depicts ozone production (g/hr) against oxygen flow (litres per minute). This depiction shows that the overall production of ozone increases as the flow of oxygen increases.

Figure 5 depicts the effect of ozone treatment on aflatoxin B1 spiked samples of corn gluten slurry.

Figure 6 depicts the effect of ozone treatment on aflatoxin B1 spiked samples of corn gluten slurry at 80°F (26.7°C).

Figure 7 depicts the use of different gaseous feedstocks for the production of ozone and their effect on the reduction of aflatoxins.

Figure 8 depicts the rate of aflatoxin inactivation compared to the rate of killing bacteria by ozone in corn gluten slurry using oxygen as the feedstock for ozone production.

Figure 9 depicts the rate of aflatoxin inactivation compared to the rate of killing bacteria by ozone in corn gluten slurry using air as the feedstock for ozone production.

As described above, several published studies suggest that treatment of dry corn kernels with ozone in the gas phase might detoxify aflatoxin-contaminated corn. Based upon these reports, in an effort to remediate aflatoxin contamination in various wet-mill process fractions, the inventors treated whole kernel corn and dry gluten meal with ozone in the gas phase. However, contrary to these prior reports, the inventors found that even extensive exposure of aflatoxin-contaminated whole kernel corn or dry gluten meal to ozone in the gas phase has no detectable effect on the level of aflatoxin in the treated materials. These studies are set out below in Comparative Examples 1 to 5. These studies either show that a significant quantity of ozone is required to effect the desired removal of aflatoxins while using ozone in the gas phase, or that said removal is not reliably reproducible.

Based upon the poor stability of ozone in liquids, and on the lack of effect of ozone in the more stable gas phase on aflatoxin contamination, it was anticipated that ozone treatment of corn gluten slurry would also fail to reduce aflatoxin contamination. Therefore, it was surprising to find that even relatively brief exposure of corn gluten slurry to ozone reliably and reproducibly eliminated high levels of aflatoxin, as shown in Examples 1 to 4 below.

As noted above, ozone is commonly used as a disinfectant in water where the organic load is very low compared to gluten slurry. However, the inventors have demonstrated that the dosage of ozone required to remove all detectable aflatoxin from corn gluten slurry is significantly less than the amount required to kill all detectable microbes in the samples. In other words, aflatoxin contamination in corn gluten slurry is more sensitive to ozone destruction than living bacteria (e.g. see Example 4).

When used herein, the term "aflatoxin(s)" relates to naturally occurring mycotoxins that are produced by many species of the fungus genus *Aspergillus,* the most notable ones being *Aspergillus flavus* and *Aspergillus parasiticus.* At least 14 different types of aflatoxin are produced in nature. Common Aflatoxins include aflatoxin B1 (which is considered to be the most toxic and is produced by both *Aspergillus flavus* and *Aspergillus parasiticus),* aflatoxins G1 and G2 (produced exclusively by *A. parasiticus),* aflatoxins M1 (found in the fermentation broth of *Aspergillus parasiticus*) and M2 (both originally discovered in the milk of cows fed on moldy grain as metabolites of other aflatoxins).

In embodiments herein, the level of aflatoxin may be measured based upon the level of aflatoxin B1 using LC/MS techniques as detailed below.

When used herein, the term "corn gluten slurry" may refer to a slurry comprising starch, fibre and corn gluten proteins with up to 50 wt% (e.g. 30 wt%, such as 20 wt%, e.g. 15 wt%) dry solids per litre and the remainder a liquid, such as water.

Alternatively, the term "corn gluten slurry" may simply refer to a slurry containing corn gluten proteins with up to 50 wt% (e.g. 30 wt%, such as 20 wt%, e.g. 15 wt%) dry solids per litre and the remainder a liquid, such as water.

When used herein "corn gluten" refers to corn proteins. For the avoidance of doubt, we note that corn gluten does not contain gluten itself (that is, the protein composite of gliadin and glutenin found in wheat, barley and rye) but rather contains corn proteins. When used herein, "corn gluten meal" may refer to a meal comprising starch, fibre and corn gluten proteins. Alternatively, this term may simply refer to corn gluten proteins alone.

When used herein, "grain gluten slurry" refers to a slurry containing grain proteins. The grain proteins may be gluten when the method involves the treatment of barley, wheat, spelt and rye or the grain proteins may be an equivalent to gluten found in oats or rice.

When used herein, "grain" may refer to any grain or cereal crop. For example, the grain may be selected from the group consisting of oats, rice, or more particularly barley, wheat, spelt and rye.

When used herein, "ozone" refers to a carrier gas containing a proportion of ozone gas. Typical carrier gases are gases containing oxygen so that ozone can be produced *in situ,* for example oxygen or air.

When used herein, the term "antifoam agent" refers to a chemical additive that reduces and hinders the formation of foam in industrial process liquids. This chemical additive can be a solid or a liquid and, for the purposes of the current invention, preferably a food-safe additive. Examples of such food-safe additives may be found on the US Food and Drug Administration's website (http://www.accessdata.fda.gov/scripts/cdrh/cfdocs/cfcfr/CFRSearch.cfm?fr=173.340).

The method disclosed herein is a method for reducing aflatoxin in grain gluten or corn gluten, the method comprising the steps of:

(a) wet-milling aflatoxin contaminated grains or corn kernels to produce grain gluten or corn gluten, and preparing a grain gluten or corn gluten slurry; and
(b) treating the grain gluten or corn gluten slurry with ozone;

wherein the temperature of the grain gluten or corn gluten slurry in step (b) is from 10 to 60°C;
wherein the grain gluten or corn gluten slurry contains from 10 wt% to 20 wt% dry solids per litre; and
wherein the grain gluten or corn gluten slurry is prepared from a wet-milled fraction of grain or corn gluten.

Preferably, the method relates to the treatment of corn gluten.

Typically, following the method above, the treated grain gluten or, more preferably, corn gluten slurry has less than 20 parts per billion aflatoxin, as measured by the content of aflatoxin B1 using LC/MS. Aflatoxin B1 is generally considered to be the most toxic of the known aflatoxins and is commonly found on corn, making it a good marker for the overall load of aflatoxins in a sample.

As discussed above, the grain gluten or, more preferably, corn gluten slurry contains from 10 wt% to 20 wt% dry solids per litre (e.g. about 15 wt% dry solids per litre). This level of solids loaded in the liquid (normally water), enables the passage of the ozone through a reaction vessel, ensuring that the required dosage of ozone is delivered.

The grain gluten or corn gluten is prepared by wet-milling aflatoxin contaminated grains or corn kernels. When used herein, the term "wet-milling" refers to a process in which feed material (*i.e.* grains (such as oats, rice, barley, wheat, spelt, rye) or corn kernels) is steeped in water so as to soften the feed material, prior to milling. Conventional wet-milling processes may be used, such as traditional corn wet milling.

Typically, the grain gluten or corn gluten prepared by wet-milling is not dried prior to preparing the grain gluten or corn gluten slurry. The grain gluten or, more particularly, corn gluten slurry is prepared from a wet-milled fraction of grain gluten or corn gluten.

Liquid or dry antifoaming agents may be added during the application of ozone gas to the grain gluten or corn gluten slurry (*i.e.* step (b)) as required to prevent foaming during the addition of gas to the grain gluten or corn gluten slurry.

Typically, the total ozone dosage is up to about 6.6 g ozone per litre of grain gluten or, more preferably, corn gluten slurry (e.g. up to about 3.3 g ozone per litre of grain gluten or corn gluten slurry, such as about up to 2.80 g ozone per litre of grain gluten or corn gluten slurry, for example from about 1.80 g to about 2.50 g ozone per litre of grain gluten or corn gluten slurry). Alternatively, the total ozone dosage is up to about 6000 parts per million (ppm) per litre of grain gluten or, more preferably, corn gluten slurry, such as about 4000 ppm per litre of grain gluten or corn gluten slurry (e.g. from about 1600 ppm to about 2800 ppm per litre of grain gluten or corn gluten slurry). Yet still alternatively, the ozone dosage may be delivered over the course of from about 30 minutes to about 2 hours as a flow of ozone in a carrier gas, where the ozone content equates to from about 1.25 g per hour to about 3.3 g per hour. Normally, ozone will be delivered in a carrier gas. When ozone is generated *in situ* the carrier gas is a gas that can be used to generate ozone, for example air or oxygen.

Typically, the reaction vessel is a vertical tube made of ozone-resistant plastic or glass that receives a stream of carrier gas (e.g. oxygen or air that contains ozone generated *in situ* when needed) into the bottom of the vessel and allows the gas to exit through the top of the vessel, optionally into a scrubbing system that removes any residual ozone. The *in situ* ozone can be generated using one or more of electrical discharge in oxygen or air (e.g. a coronal discharge), electrolysis of water, or by thermal, photochemical or radiochemical methods. Preferably, the ozone is generated by a coronal discharge in oxygen or air.

As will be appreciated, instead of using a tubular reaction vessel, it is possible to add a fixed dose of ozone into a vessel containing grain gluten or, more preferably, corn gluten slurry, which vessel is then agitated to ensure that the ozone is consumed to reduce the loading of aflatoxins in the grain gluten or corn gluten slurry.

In conducting the addition of ozone gas to the grain gluten or, more preferably, corn gluten slurry, it was found that the grain gluten or corn gluten slurry had a tendency to foam. This led to problems in containing the foaming grain gluten or corn gluten slurry within the reaction vessel (e.g. a reaction tube made of glass of plastic) used for the process. In order to reduce the excessive foaming, an antifoam agent was introduced to the vessel as required. For example, a portion of antifoaming agent can be added to the reaction vessel before the ozone is bubbled into the grain gluten or corn gluten slurry and/or the antifoaming agent can be added during the application of ozone gas to the grain gluten or corn gluten slurry. While it is possible to use both solid and liquid antifoaming agents, it is preferable to use liquid antifoams. Suitable liquid antifoams include Dow Corning FG-10 antifoam emulsion.

As discussed herein, ozone is sensitive to temperature changes, particularly when placed into a liquid such as water. Given this, the process is typically run at a temperature from about 10 to about 30°C (e.g. from about 15 to about 29°C, from about 20 to about 28°C, such as about 27°C) in order to maximise the half-life of the ozone applied to the grain gluten or, more preferably, corn gluten slurry. However, the process may also be run at a temperature from about 10°C to about 60°C, from about 30°C to about 60°C (e.g. from about 35°C to about 60°C, from about 45°C to about 60°C, from about 50°C to about 60°C, from about 53°C to about 55°C, such as about 54°C).

An advantage of the current invention is that the amount of ozone required to generate a reduction (e.g. a complete elimination) in the level of aflatoxins is much lower than that required when the treatment of grains, grain meal or, more preferably, corn kernels or corn meal is conducted in the gas phase. For example, in Example 1 below, the amount of ozone required to reduce the amount of aflatoxin B1 in corn slurry to below detectable levels (i.e. < 1ppb) is about half of the dose provided in Comparative Examples 5 and 6, where no significant change in the level of aflatoxin B1 was reported following treatment of dry corn meal with gaseous ozone.

In accordance with FDA guidelines, corn and its products having ≥20 ppb aflatoxins is considered unsafe for human consumption (or for some animals), while corn and its products having ≥100 ppb, ≥200 ppb and/or ≥300 ppb aflatoxins is considered unsafe for animal consumption, depending on the age, type and ultimate use of the animal in question. For example, as set out on the Office of Indiana State Chemist's website (http://www.isco.purdue.edu/feed/mycotoxins.htm), immature animals, immature poultry and dairy animals should not be exposed to corn and peanut feed products having ≥20 ppb aflatoxins; breeding cattle, breeding swine and mature poultry should not be exposed to corn and peanut feed products having ≥100 ppb aflatoxins; finishing swine should not be exposed to corn and peanut feed products having ≥200 ppb aflatoxins; and finishing beef cattle should not be exposed to corn and peanut feed products having ≥300 ppb aflatoxins. Similar guidelines apply to other grains.

While the process described herein can be used to improve grain gluten meals or, more particularly, corn gluten meal that is not contaminated with more than 20 ppb aflatoxins, it has been found that the current process is particularly useful in making grain gluten meals or corn gluten meal containing a quantity of aflatoxins that is unsafe for human and/or animal consumption into grain gluten or corn gluten.

Therefore, the process described herein is particularly useful in respect of grain gluten or, more particularly, corn gluten slurry that is contaminated with greater than or equal to 20 parts per billion (ppb) aflatoxins (e.g. from about 30 ppb to about 100 ppb aflatoxins, such as from 40 to 50 ppb aflatoxins). For example, the dry solids of the grain gluten or corn gluten slurry before processing can be contaminated with from about 100 to 500 ppb aflatoxins (e.g. from 100 to 300 ppb). In improving the grain gluten or corn slurry, the current process is capable of reducing the contamination of aflatoxins to less than 1 ppb (i.e. to less than a detectable level of aflatoxins).

The invention will now be illustrated by means of the following examples, it being understood that these are intended to explain the invention and in no way to limit its scope.

**EXAMPLES**

Measurement of Aflatoxin B1

An Aflatoxin B1 (standard) and $^{13}$C labelled Aflatoxin B1 (Internal standard for spiking) were purchased from Romer Lab, St. Louis, MO, USA. LC-MS separations were performed on Waters 2695 HPLC interfaced with Waters Quattro Micro triple quadrupole mass spectrometer. The ionization was performed in the positive mode with the following parameters.

| Sample | Parent Ion (m/z) | Primary Transition (m/z) | Collision Energy (m/z) | Secondary Transition (m/z) | Collision Energy (m/z) |
|---|---|---|---|---|---|
| Aflatoxin B1 | 313.1 | 241.1 | 49 | 285.0 | 37 |

Mobile phase: Solvent A (0.1% formic acid with 5 mM ammonium formate); Solvent B (acetonitrile); Flow rate: 1.0 mL/min; Column: Phenomenex Gemini $C_{18}$ (150 x 4.6 mm), $5\mu m$; Temperature: 40°C; Injection volume: 40 $\mu L$.
The gradient program was as follows,

| Time (min) | Solvent A (%) | Solvent B (%) |
|---|---|---|
| 0 | 90 | 10 |
| 14.0 | 3 | 97 |
| 15.0 | 3 | 97 |
| 15.1 | 10 | 90 |
| 16.0 | 10 | 90 |

Comparative Example 1

*Stability of ozone in air and water.*

Table 1 lists the half-life stabilities of ozone in gas and water at different temperatures. The data provided below was obtained from Lenntech BV, The Netherlands (http://www.lenntech.com/library/ozone/decomposition/ozone-decomposition.htm)

**Table 1**

| Air | | Dissolved in water (pH 7) | |
|---|---|---|---|
| Temp (°C) | Half life | Temp (°C) | Half life |
| -50 | 3 months | | |
| -35 | 18 days | 15 | 30 min |
| -25 | 8 days | 20 | 20 min |
| 20 | 3 days | 25 | 15 min |
| 120 | 1.5 hours | 30 | 12 min |
| 250 | 1.5 second | 35 | 8 min |

Comparative Example 2

*Gaseous Ozone is not effective in reducing aflatoxin in contaminated corn kernels.*
Three samples of corn were obtained from the Decatur, Illinois plant and one of the samples was chosen at random for use in this test. The sample used was labelled: "28995 Heritage Grain Dalton City"
This chosen sample container had 1,278 g of corn kernels, which were transferred to a 4 L jar and thoroughly mixed. The sample was then split into two portions, T0 and T4 as detailed below.

T0, control sample:     638     9

T4, experimental:       640     9

Protocol:

1. A plastic reaction tube with a direct feed from the ozone supply line at the bottom was constructed with a small amount of glass wool to prevent kernels and dust from blocking the feed line. The top of the reaction tube was capped after addition of the kernels to the tube and an exhaust line fitted to lead the exhaust gas to a jug containing gluten meal slurry as a scrubber.

2. Ozone was produced using an OZV-8 generator with dry compressed air feed. The flow rate of air was 1 litre per minute (LPM). There was no measureable back pressure. The generator was set at the maximum voltage (setting = 10). The vendor supplied data indicates that 1.25 g/Hr ozone is delivered under these conditions.

3. The generator was turned on and ozone was detected at the top of the scrubber within 5 minutes. Ozone-containing gas was allowed to flow through the reaction tube for 4 hours. The reaction tube was then flushed with air (generator turned off) for 5 minutes, at which point ozone was no longer detected from the feed line.

The entire T0 and T4 samples were respectively ground in a Krupps mill and the ground corn from each sample was thoroughly mixed. Representative samples (5 g) were taken from each of the ground corn samples and were extracted with acetonitrile with additional ball milling. The extracts were analysed by liquid chromatography, mass spectrometry (LC/MS). The results are summarised in table 2 below.

**Table 2**

| Sample LIMS# | Exposure time (Hours) | Grams meal exposed | Residual Aflatoxin (ppb) | Comments |
|---|---|---|---|---|
| 338625 | 0 | 638 | 12.0 | No exposure |
| 338626 | 4 | 640 | 24.4 | Ozone |

As can be seen from the results in Table 2, the treatment of whole corn kernels with ozone for 4 hours (5 g Ozone) was not effective. Further, there is a significant variability between samples of corn kernels even when sourced from a thoroughly blended common stock of kernels. This variability can lead to the false conclusion that aflatoxin has been reduced or eliminated, as can be seen by the fact that the sample exposed to ozone has a higher residual aflatoxin level than the control. It is speculated that this variability may account for the reduction in aflatoxins that have been previously reported.

Comparative Example 3

*Gaseous ozone is not effective in reducing aflatoxin in contaminated dry gluten meal using a fixed amount of ozone and varying amounts of dry gluten meal*

*Objectives*

1. Determine whether ozone treatment of dry gluten meal will reduce aflatoxin levels.
2. Determine whether increasing amounts of dry meal will influence effects of a fixed level of ozone.

Protocol:

1. A 4 L collapsible plastic square jug was used to capture ozone-containing gas for reaction with dry gluten meal. To measure the volume of the jug, the weight of the empty jug was measured and the weight of the jug filled with water was measured:

| | | |
|---|---|---|
| **Jug plus water** | | **4204 g** |
| Jug tare wt | 80.84 g | |
| Water wt | 4123.16 g = 4123.16 mls = 4.12 L | |

2. Dry corn gluten meal with high aflatoxin levels was obtained from the Lafayette plant (sample: LIMS 338084, "STLX 5221, ugly GLM from Lafayette"). 477.30 g of meal was weighed out into a jar and thoroughly mixed to form a stock meal. From this stock meal, samples in the amounts indicated in Table 3 below, were placed in plastic reaction jars.

3. Compressed air was used to feed the OZV-8 ozone generator. The feed of dry air was ~ 1 LPM, with 0 psi and voltage setting 10 (max). Under these conditions, the vendor's data indicates that ~20.8 mg/L of ozone (1.25 g/Hr) is produced. The ozone-containing gas flowed into the jar with the lid open for 15 minutes to flush out air in the container and replace the volume with ozone-containing gas. After 15 minutes, the ozone generator was turned off, the compressed air feed to the ozone generator was shut, the ozone feed line to the jug was removed and the jug was sealed.

Estimated ozone in the reaction jug = 85.8 mg

4. Each sealed reaction jug containing the amounts of dry meal and ozone-containing gas indicated in Table 3 below were thoroughly mixed by vigorous shaking for ~ 5 min.

5. Each of the samples were extracted with acetonitrile and ball milling prior to LC/MS analysis of aflatoxin.

The results are summarised in Table 3 below.

**Table 3**

| Sample (LIMS#) | Meal Sample Weight (g) | Ozone Dose (mg/g meal) | Residual aflatoxin (ppb) | Comments |
|---|---|---|---|---|
| 1 (338235) | 15.11 | 5.68 | 26.8 | |
| 2 (338236) | 50.13 | 1.71 | 24.0 | |
| 3 (338237) | 102.43 | 0.84 | 28.6 | |
| 4 (338238) | 250.01 | 0.34 | 31.4 | |
| 5 (338235) | 59.56 | 0.00 | 28.0 | Control, no $O_3$ treatment |
| 6 (338084) | N/A | 0.00 | 32.8 | Control, no $O_3$ treatment |

Based upon the above, varying amounts of dry corn gluten meal exposed to a fixed level of ozone in a reaction jug does not significantly affect the aflatoxin contamination. This is clearly seen for the assay of highest ozone dosage Sample 1, which clearly shows that stationary treatment of dry corn meal was not effective.

Comparative Example 4

*Gaseous ozone is not effective in reducing aflatoxin in contaminated dry gluten meal using surface-flow exposure.*

In Comparative Example 3, varying amounts of dry corn meal were exposed to a fixed amount of ozone in a 4L jar with mixing resulting in no indication of aflatoxin reduction. The present example considers whether any change in the level of aflatoxin results when a relatively fixed amount of dry meal is exposed to a continuous flow of ozone gas over the surface of corn meal with periodic mixing. It proved difficult to get enough pressure to push ozone-containing gas through a column of meal, so this experiment was set up as a "horizonal flow" system instead.

Protocol:

A fritted-glass sparger at the end of a delivery tube was fitted to the base of a glass reactor tube. The reactor tube has a cap with an exhaust line. The cap was removed and the dry meal was poured into the tube. The tube was then oriented horizontally, with the meal spread along its entire length. With the tube cap closed, the delivery sparger is at the bottom of the reactor tube and is only partly covered by meal. If the sparger is covered, there is no gas flow through the system. Under this set up, ozone-containing gas passes across the surface of the spread-out meal along the length of the glass reactor tube, but does not percolate through the meal.

Dry corn meal sample:

The gluten meal was from sample LIMS # 338083 (61.2 ppb aflatoxin by prior assay). Table 4 lists the weights of the meal samples exposed for varying amounts of time to the ozone-containing gas.

Experimental:

Compressed air was used to feed the OZV-8 ozone generator. The feed of dry air was ~ 1 LPM, with 0 psi and using voltage setting 10 (max). Under these conditions, the vendor's data indicate ~20.8 mg/L of ozone (1.25 g/Hr).
The ozone-containing gas flowed over the sample for the times indicated in Table 4, with the reaction tube being rotated every 15 min to mix the sample. At the end of the each indicated exposure time, the ozone generator was shut off and air was flushed through the reactor. A sample of ~15 g was removed from the vessel, the remaining weight of sample was measured, and then the flow of the ozone-containing gas was continued. The removed samples were extracted with acetonitrile and subjected to ball milling prior to LC/MS analysis for aflatoxin. The results are summarised in Table 4 below.

**Table 4**

| LIMS# | Exposure time (hours) | Grams Meal Exposed | Residual aflatoxin (ppb) | Comments |
|---|---|---|---|---|
| 338363 | 0 | 157.20 | 62.4 | Control. Prior assay = 61.2ppb |
| 338364 | 1 | 142.11 | 63.6 | |
| 338365 | 2 | 125.45 | 69.6 | |
| 338366 | 3.5 | 109.54 | 60.4 | |

As shown in Table 4, even when dry corn gluten meal is exposed to a continuous flow of ozone containing gas for a prolonged period of time there is no discernable effect on the level of aflatoxin in the sample.

Comparative Example 5

*Gaseous ozone is not effective in reducing aflatoxin in contaminated dry gluten meal exposed in a fluidized bed for > 10 hrs.*
Comparative Examples 3 and 4, where dry corn gluten meal was exposed to ozone in the gas phase were not effective in reducing the aflatoxin in the samples. To ensure that sufficient contact between the ozone gas and the gluten powder was being made, a further experiment was run, where the granulated gluten was continuously exposed to ozone when the powder was fluidized in a stream of air.

Protocol:

A bench-scale fluidized bed dryer (Sherwood Scientific) was set up in a chemical hood. The bench-scale ozone generator (OZV-8 ozone generator) was set up in the hood with a compressed air feed. The ozone delivery line was fed into the fluidized bed through a hole in the dust collection sock at the top of the glass vessel of the dryer (tightly fastened to prevent dust escape around the entrance hole). The dryer was run at room temperature at ~ ¾ setting (set number # 7) which provided adequate air flow through the base of the glass vessel to fluidize ~ 400g of dry gluten meal.

Dry meal sample:

The gluten meal was from LIMS # 338083 (61.2 ppb aflatoxin by prior assay). The weights of the meal exposed for the various times and their LIMS number are listed below in Table 5.

Experimental:

Compressed air was used to feed the OZV-8 ozone generator. The feed of dry air was ~ 1 LPM, with 0 psi and voltage setting 10 (max). Under these conditions, the manufacturer's data indicate that ~20.8 mg/L of ozone (1.25 g/Hr) will be produced.

The ozone-containing gas flowed through the fluidized sample (~400 g) for the indicated times. At the end of the indicated exposure time, the ozone generator was shut off and air was flushed through the reactor. A sample of ~15 g was removed from the vessel, and then the flow of the ozone-containing gas was continued over the remaining sample.

The results of these experiments are summarised in Table 5 below.

**Table 5**

| LIMS# | Exposure time (hours) | Grams Meal Exposed | Residual aflatoxin (ppb) | Comments |
|-------|----------------------|--------------------|--------------------------|----------|
| 339034 | 0 | N/A | 40.8 | Control |
| 339035 | 2 | 400.28 | 49.2 | |
| 339038 | 10.5 | 293.89 | 47.6 | |

Approximately fixed amounts of fluidized dry gluten meal were exposed for varying times to ozone-containing gas. At intervals ~ 15 g samples were removed and were subjected to extraction with acetonitrile & ball milling prior to LC/MS analysis for aflatoxin B1. As can be seen from Table 5, Ozone treatment was not effective in reducing the amount of aflatoxins in the corn meal.

Example 1

*Ozone in the liquid phase is very effective in reducing aflatoxin in contaminated gluten slurry (~15 wt% DS).*

There are several methods for the production of ozone, e.g. electrical discharge in $O_2$ or air, electrolysis of water, or thermal, photochemical or radiochemical methods. But in this experiment, ozone was produced by an industrial oxygen generator through a corona discharge process. In corona discharge, enriched $O_2$ from an oxygen generator was fed into an ozone generation unit that converts the oxygen to ozone using high voltage (e.g. see Fig. 2).

**1.1. Ozone Conversions & Equations**

See: http://www.ozonesolutions.com/info/ozone-conversions-equations

Physical Properties at Standard conditions:
Pressure = 1013.25 MB, Temperature = 273.3 K

| | *Density* | *Molecular weight* |
|---|---|---|
| Ozone | 2.14 kg/m$^3$ | 48 |
| Oxygen | 1.43 kg/m$^3$ | 32 |
| Air | 1.29 kg/m$^3$ | 1,000 kg/m$^3$ |

***Ozone concentration in Air & Oxygen by weight***

100 g $O_3$/m$^3$ = ~ 6.99% $O_3$
1% $O_3$ = ~ 14.3 g $O_3$/m$^3$
1% $O_3$ = 6,520 ppm Ozone

***Ozone concentration in Water***

1 mg/l = 1 ppm $O_3$ = 1 g $O_3$/m$^3$ water

***Ozone concentration in Air by volume***

1 g $O_3$ / $m^3$ = 467 ppm $O_3$
1 ppm $O_3$ = 2.14 mg $O_3/m^3$
100 pphm (parts per hundred million) = 1 ppm (parts per million)

*Adjust Flow Rate Conversion*

$$(\text{adjusted flow}) = (\text{measured flow}) \cdot \sqrt{\frac{(\text{oxygen pressure}) + 14.7}{14.7}}$$

*Determining Ozone Dosage in Water*

Water flow rate (X) ozone dosage = required ozone production

*Determine the output of an ozone generator*

Flow rate (LPM) x ozone concentration ($g/m^3$) = ozone production (mg/hr)

## 2. EXPERIMENTAL

### 2.1. Material and Methods

- Oxygen generator (industrial oxygen supply), Ozone generator TG-40 from Ozone Solutions
- Reaction vessel - ozone resistant PVC tubes
- Oxygen flow rate 0.5 L/min (LPM); pressure ~10 psi; Concentration of Ozone in Oxygen gas: 110 $g/m^3$; Produced $O_3$ **output** = 0.5 L/min x 110 $g/m^3$ x (1 $m^3$/1,000 L) = 0.055 g/min = **3.3 g/hr**

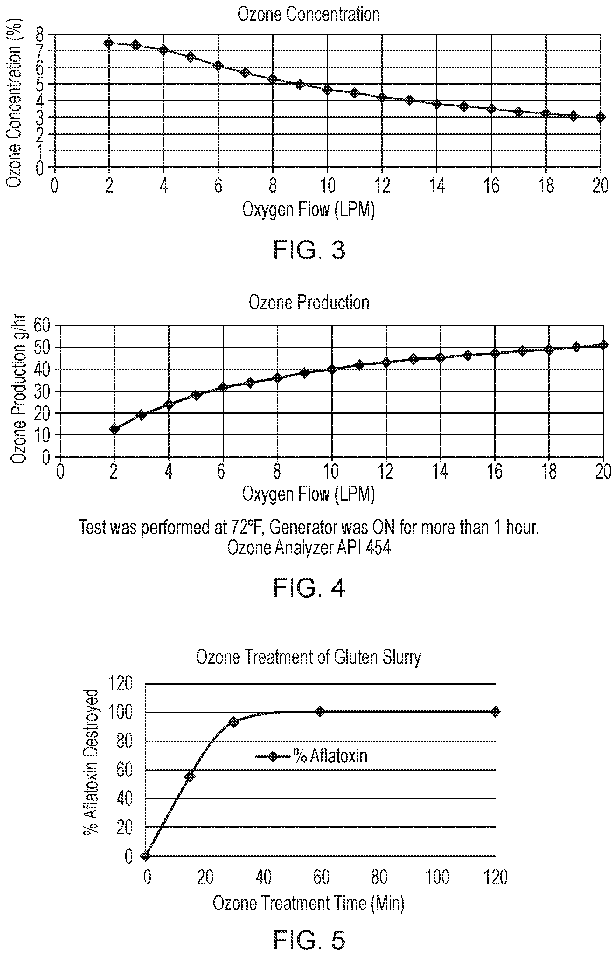

The TG-40 Ozone Generator generates $O_3$ via corona discharge. In this process an electrical spark is used to split the molecular bond of oxygen, found in nature in the form of $O_2$, into the atomic O-form of oxygen. These O-atoms attach themselves to other $O_2$ molecules to form $O_3$. The proper ozone production and concentration for the necessary application can be determined and achieved by using the TG-40 performance chart shown below (Table 6; http://www.ozonesolutions.com/products/Industrial-Ozone-Generators/TG-40 40 gram hour Ozone Generator). As noted in Table 6 below, as the flow increases, the concentration of ozone (% by weight) decreases, conversely as the flow decreases the concentration of $O_3$ increases. See also Figures 3 and 4.

**Estimated Ozone Output for TG-40**

20 g/hr Ozone - 4 LPM Oxygen
30 g/hr Ozone - 6 LPM Oxygen
40 g/hr Ozone - 10 LPM Oxygen

**TG-40 Ozone Generator**

Table 6

| Ozygen Flow in LPM | Ozone Concentration g/Nm3 | Ozone Concentration, % by weight | Ozone Production In g/hr | Oxygen Pressure PSI |
|---|---|---|---|---|
| 2.00 | 119.5 | 7.50 | 12.87 | 10 |
| 3.00 | 114.3 | 7.37 | 18.97 | 10 |
| 4.00 | 110.1 | 7.05 | 24.20 | 10 |
| 5.00 | 104.4 | 6.66 | 28.57 | 10 |
| 6.00 | 97.3 | 6.15 | 31.66 | 10 |
| 7.00 | 90.7 | 5.68 | 34.11 | 10 |
| 8.00 | 86.2 | 5.33 | 36.59 | 10 |
| 9.00 | 79.0 | 4.98 | 38.46 | 10 |
| 10.00 | 74.3 | 4.68 | 40.15 | 10 |
| 11.00 | 68.6 | 4.49 | 42.38 | 10 |
| 12.00 | 64.6 | 4.24 | 43.66 | 10 |
| 13.00 | 61.0 | 4.02 | 44.84 | 10 |
| 14.00 | 57.0 | 3.80 | 45.65 | 10 |
| 15.00 | 3.5 | 3.65 | 46.98 | 10 |
| 16.00 | 53.1 | 3.47 | 47.64 | 10 |
| 17.00 | 51.1 | 3.33 | 48.57 | 10 |
| 18.00 | 48.7 | 3.18 | 49.11 | 10 |
| 19.00 | 46.9 | 3.07 | 50.05 | 10 |
| 20.00 | 45.6 | 2.99 | 51.31 | 10 |

## 2.2. Corn Gluten Samples

Contaminated corn gluten slurry samples (LIMS 335552 & 335553) with dry solids (DS) 15 wt% were obtained from the Tate & Lyle, Decatur plant. Samples (1L each) were then spiked with Aflatoxin B1 to get a final concentration of 50 ppb in the liquid slurry (LIMS 335185) before ozone treatment.

## 2.3. Sample treatment with Ozone

AFB1 spiked slurry samples were transferred in to a 2 L capacity ozone resistant PVC tube. The top end of the tube was connected to an ozone destruction unit. The spiked slurry sample was treated for 15, 30, 60 and 120 min at room temperature (27°C) with 3.3 g/hour of ozone flowing from the bottom of the tube. Ozone gas was produced from the ozone generator model TG-40 using a large industrial scale oxygen generator as described earlier. Anti-foams (either solid or solution) were introduced into the reaction tube at regular intervals to prevent the gluten slurry from excessive foaming. Tables 7 and 8 summarise the conditions applied to the materials.

The samples removed at 0, 15, 30, 60 and 120 min were treated in the manner described for the comparative examples to test the level of residual aflatoxin.

**Table 7**

| LPM (L/min) | Conc. of O3 in O2 gas | G/hr |
|---|---|---|
| 0.5 | 110.00 | 3.3 |

**Table 8**

| LIMS | Time (min) $O_3$ exposure | Initial applied $O_3$ Dose | Initial Dose in (~ppm) | Dose (g) |
|---|---|---|---|---|
| 335185 | control | 0 | 0 | 0 |
| 335528 | 15 | 3.3 g/hr | 750 | 0.825 |
| 335529 | 30 | 3.3 g/hr | 1500 | 1.650 |
| 335530 | 60 | 3.3 g/hr | 3000 | 3.300 |
| 335531 | 120 | 3.3 g/hr | 6000 | 6.600 |

### 3. RESULTS & DISCUSSION

The corn gluten slurry was flushed with 110 g/m$^3$ of Ozone gas to 1L gluten slurry. Ozone gas escaping the system was monitored and measured (for 15 min to 2h) and found to be (0.1 g/m$^3$), < 1% (meaning almost 99% of applied dose of $O_3$ gas is being consumed by the sample). There is no way to measure the residual $O_3$ in the slurry sample due to its yellow color and solid content (unlike water treatment where colorimetric kits can be used to measure residual ozone). As noted above, the solubility of ozone in water is very low at higher temperatures. The higher the temperature, the more the ozone escapes the solution. Hence low temperatures are ideal for $O_3$ reactions. Foaming can be a major problem and it was found that dry (*i.e.* solid) antifoams did not work very well, but that liquid antifoams solved the issue to some extent. It is noted that the applied $O_3$ doses were comparatively high as 1-2 ppm residual ozone is required for killing bacteria (see Example 4).

### 3.1. Effect of ozone gas on Aflatoxin B1 (AFB1) spiked corn gluten slurry

The data presented below in Table 9 shows the amount of AFB1 detected by LC-MS in spiked samples following exposure to ozone in the liquid phase. During ozonolysis Aflatoxin B1 (AFB1) was degraded from 277 ppb (control - dry corn gluten) to 125 ppb and 21 ppb respectively after 15 and 30 min of exposure. There was no detectable amount of AFB1 present for samples treated at 60 and 120 min. A 55% reduction of AFB1 was observed following 15 min treatment, whereas less than 7% residual AFB1 was present after 30 min exposure of the corn gluten slurry to ozone. It was also noted that the slurry changed colour from bright yellow to colourless during the exposure. These results are summarised in Table 9 below.

LC-MS quantification of aflatoxin B1 on ozone treated samples

**Table 9**

| $O_3$ exposure Time (min) | $O_3$ Dose ~ ppm | AFB1 Ppb, DS | AFB1 ppb, in slurry | % decrease of AFB1 | Observation |
|---|---|---|---|---|---|
| Control | 0 | | 24.4 | 0% | bright yellow |
| Control spiked 0 | 0 | 277 | 42 | 0% | bright yellow |
| 15 | 750 | 125 | 19 | 54.9% | yellow |
| 30 | 1500 | 21.2 | 3 | 92.4% | slight change from yellow |
| 60 | 3000 | < 1 | < 1 | 100% | faint yellow |
| 120 | 6000 | < 1 | < 1 | 100% | colorless |

*Conclusions*

This example clearly demonstrates that ozonolysis of corn gluten slurry is very effective in destroying aflatoxin at an $O_3$ concentration of 3.3 g/hr.

Example 2

*Ozone in the liquid phase is very effective in reducing aflatoxin in contaminated gluten slurry (~15 wt% DS), with concentrated oxygen used as feed to ozone generator.*

Objectives:

1. Confirm that a significant reduction in aflatoxin in corn gluten slurry is obtained when treated with ozone.
2. Determine the effects of time of exposure to a more or less fixed flow of ozone on aflatoxin levels in gluten slurry.

Protocol:

This example was conducted on a laboratory scale using an AS-12 High Concentration Oxygen Concentrator in combination with a TG-40 Ozone Generator from Ozone Solutions Inc. The initial flow of the oxygen concentrator was set as low as possible to approximately 0.5 LPM = 1 SCF/Hr. The pressure was -10 psi. The ozone generator was set at maximum voltage: i.e. 10. The antifoam used was a liquid antifoam (Dow Corning FG-10 antifoam emulsion (LIMS 28353)).

The corn gluten slurry (LIMS 31426) was from the Decatur plant and stored at 4°C. The dried slurry had 20 ppb aflatoxin.

8 x1 L samples at 80°F (26.7°C) were incubated in a water bath to temperature equilibrate and were then transferred into a reaction tube and were subjected to ozonolysis. Antifoam was added to the tube as required during the reaction.

Following reaction for various times (as indicated in Figure 5 below), the ozone-treated 1 L slurry samples were sampled (~100 mL) and the samples were dried overnight at 60°C in a forced air oven. A portion of the dried samples was processed for LC/MS aflatoxin analysis as described above and the results are summarised in Figure 5.

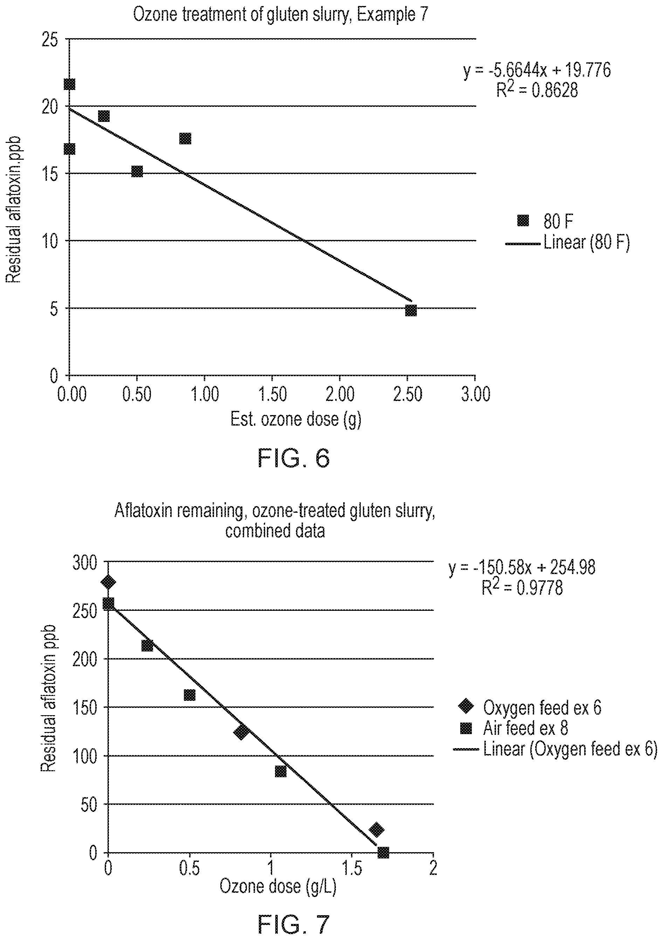

This experiment confirms the destruction of aflatoxin in gluten slurry in liquid-phase ozone treatment, even when conducted at a temperature where the half-life of ozone is significantly reduced (i.e. 13.5 minutes). There is a reasonable correlation between the dose of ozone provided and the decline in aflatoxin in corn gluten meal slurry, as shown in Figure 6. As shown in Figure 6, the 50% reduction level in aflatoxin occurs at a dose of ~1.8 g, which is somewhat higher than seen in Example 1. It is postulated that this difference is due to the different equipment used between Example 1 and the current example.

Example 3

*Ozone in the liquid phase is very effective in reducing aflatoxin in contaminated gluten slurry (~15 wt% DS), even when compressed air is used as the feed to the ozone generator.*

Objectives:

1. Confirm prior experimental results, which show that the dosages of ozone cause a proportional reduction in aflatoxin levels in corn gluten slurry.
2. Compare the dosages of ozone required to reduce aflatoxin to the effect on the total microbial content.

Protocol:

1. Fresh corn gluten slurry (1,415.32 g) was obtained from the Decatur plant and delivered to the laboratory the same day. The sample was stored overnight at 4°C.

2. The slurry was spiked with aflatoxin to produce a corn gluten slurry containing 50 ppb of aflatoxin B1, as was done in Example 1.

Calculation:

1 mg per 5 mL stock solution = 0.2 mg/mL
0.35 mL of stock solution into 1,400 mL of slurry = 0.00005 mg/mL = 0.0500 μg/mL = 50.00 ng/mL = ppb
3. 7 mL of a liquid antifoam emulsion was added to the reaction tube (Dow-Corning FG-10 LIMS 28353).
4. The spiked slurry was placed into reaction tube and air flow (~1 LPM) started. An additional 3 mL of antifoam added (total 10 mL).
5. Prior to sampling, the ozone generator (but not the air flow) was turned off. Ozone was no longer detected at the head of the reactor tube ~1 to 2 minutes after the generator was switched off. Air flow was maintained during sampling. Approximately 100 mL of slurry was drained from the reaction tube and added back to the top of the column to flush out the exit line prior to taking a sample. Then approximately 100 mL of the spiked slurry was removed as a sample for aflatoxin analysis. At each time point, the volume in the reaction tube was reduced by the sample volume (~100 mL). Samples for aflatoxin analysis were stored at 4°C prior to drying at 60°C overnight. Removed ~10 mL of treated slurry for microbial total plate count (TPC): sterile 50 mL centrifuge tube, stored at 4°C.
6. Ozone generation conditions (vendor's estimated values).

| | | |
|---|---|---|
| Ozone generation voltage setting | 10 | (Max. 100%) |
| Airflow | 1 | LPM |
| Pressure | 3 | psi |
| Estimated ozone delivery | 1.25 | g/Hr |

7. Once the ozone generator was started, ozone was detected at the head of the reactor column within ~ 1-2 minutes.
The results are summarised in Figure 7, which combines the results of Example 1 (concentrated oxygen feed to ozone generator) and Example 3 (compressed air feed to ozone generator). In the two examples, the rate of reduction of aflatoxin in the corn gluten slurry samples was very similar relative to the ozone dosages (g/L). Therefore, the use of air as the feedstock for the production of ozone does not affect the outcome and Example 3 confirms that ozone in the liquid phase is very effective and reproducibly removes aflatoxin from corn gluten slurry.

Example 4

*Aflatoxin contamination of corn gluten slurry is more sensitive to ozone degradation than living bacteria in the samples.*

Objectives:

Measure the relative sensitivities to ozone attack in gluten slurry solution of aflatoxin and live bacteria.

Protocol:

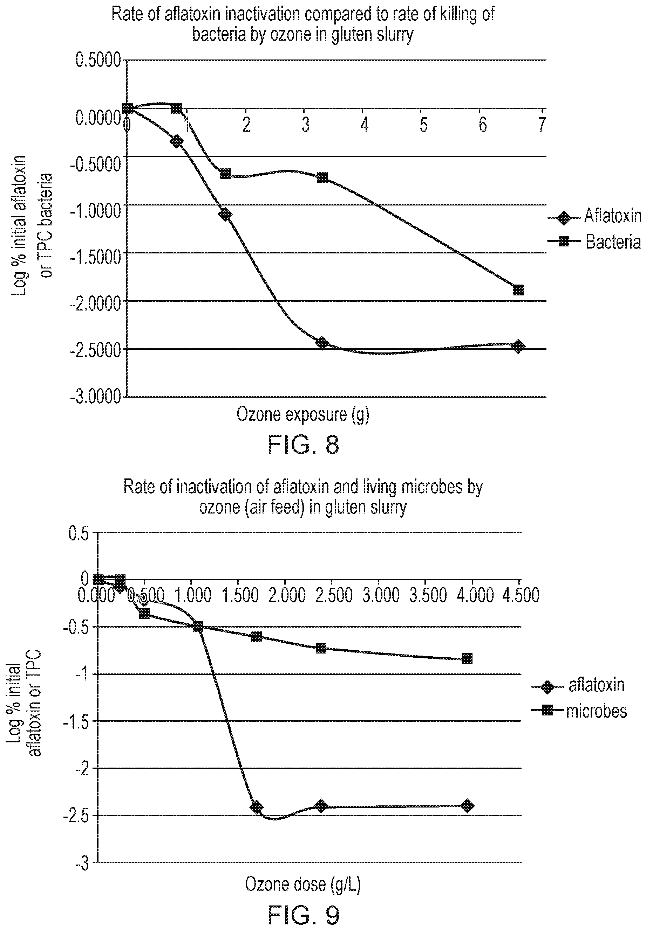

The ozone-treated gluten slurry samples from Examples 1 and 3 were assayed for living bacteria by ability to form colonies on agar plates ("total plate counts", TPC) and the results are displayed in Figures 8 and 9.
Figure 8 compares the degradation rate (Log %) of aflatoxin v. loss of viability (Log %) of microbes in the ozone-treated gluten slurry (Example 1 samples), whereas Figure 9 compares the degradation rate (Log %) of aflatoxin v. loss of viability (Log %) of microbes in the ozone-treated gluten slurry (Example 3 samples). Note the differences in the horizontal scales: Example 1 includes samples treated at significantly higher doses than in Example 3.
In conclusion, the ozone dosages that significantly reduce aflatoxin levels in corn gluten slurry are low compared to the dosages required to eliminate living bacteria from the samples. This shows that the disclosed method does not require excessive dosages of ozone for aflatoxin treatment, in contrast to the levels that appear to be needed for the treatment of dry corn kernels/corn meal using gaseous ozone. In other words, the dosages of ozone required to eliminate aflatoxin from corn gluten slurry liquids are surprisingly lower than the dosages that are ineffective in the gas phase for reducing aflatoxin in whole kernel corn or in dry gluten meal powders.

Example 5

*Ozone in the liquid phase is very effective in reducing aflatoxin in contaminated gluten slurry (~15 wt% DS), with compressed air used as feed to ozone generator.*

Objectives:

To confirm prior experimental results, which show that the dosages of ozone cause a proportional reduction in aflatoxin levels in corn gluten slurry.

Protocol:

The corn gluten slurry was from the Decatur plant and stored at 4 °C. A dried sample of the slurry was found to have 20 ppb aflatoxin content.

4 x 1 L samples were incubated in a water bath at 130°F (54.4°C) to temperature equilibrate. A first 1L sample was then transferred into a reaction tube and liquid antifoam (Dow-Corning FG-10 LIMS 28353) was added. Air flow (~1 LPM) was started, but the ozone generator was not turned on. A sample of gluten slurry was collected at time zero. The ozone generator was then turned on at a flow of 0.5 LPM (1 SCF/hr) for 5 minutes. The generator was then turned off and the contents of the column collected for aflatoxin analysis.

The reaction tube was rinsed and cleaned with water and dilute bleach.

A second 1L container equilibrated to 130°F (54.4°C) was transferred to the reaction tube and the air flow started, antifoam was added and the ozone generator turned on at at a flow of 0.5 LPM (1 SCF/hr) for 10 minutes. The contents of the column were collected for analysis.

The above process was repeated a further two times with ozone treatment times of 17 and 20 minutes.

The results are summarised as follows:

| Time, minutes | Aflatoxin, ppb |
|---|---|
| 0 | 19.2 |
| 5 | 20.0 |
| 10 | 15.2 |
| 17 | 17.6 |
| 20 | 4.8 |

These result of Example 5 confirm that the use of air as the feedstock for the production of ozone does not affect the outcome and confirms that ozone in the liquid phase is very effective and reproducibly removes aflatoxin from corn gluten slurry.

## Claims

1. A method for reducing aflatoxin in a grain gluten or corn gluten, the method comprising the steps of:

   (a) wet-milling aflatoxin contaminated grains or corn kernels to produce grain gluten or corn gluten, and preparing a grain gluten or corn gluten slurry; and
   (b) treating the grain gluten or corn gluten slurry with ozone;

   wherein the temperature of the grain gluten or corn gluten slurry in step (b) is from 10 to 60°C;
   wherein the grain gluten or corn gluten slurry contains from 10 wt% to 20 wt% dry solids per litre; and
   wherein the grain gluten or corn gluten slurry is prepared from a wet-milled fraction of grain gluten or corn gluten.

2. The method of Claim 1, wherein the grain gluten is a gluten derived from a grain selected from the group consisting of oats, rice, barley, wheat, spelt and rye; or
   wherein the method relates to corn gluten.

3. The method of any preceding claim, wherein step (b) is conducted by bubbling ozone gas through the grain gluten or corn gluten slurry.

4. The method of any preceding claim, wherein the resulting grain gluten or corn gluten slurry has less than 300 parts per billion aflatoxin, as measured by the content of aflatoxin B1 using LC/MS, optionally wherein:

the resulting grain gluten or corn gluten slurry has less than 200 parts per billion aflatoxin, as measured by the content of aflatoxin B1 using LC/MS; or

the resulting grain gluten or corn gluten slurry has less than 100 parts per billion aflatoxin, as measured by the content of aflatoxin B1 using LC/MS; or

the resulting grain gluten or corn gluten slurry has less than 20 parts per billion aflatoxin, as measured by the content of aflatoxin B1 using LC/MS.

**5.** The method any preceding claim, wherein the grain gluten or corn gluten slurry contains 15 wt% dry solids per litre.

**6.** The method of any preceding claim, wherein the total ozone dosage is up to 6.6 g ozone per litre of grain gluten or corn gluten slurry, optionally wherein:

the total ozone dosage is up to 3.3 g ozone per litre of grain gluten or corn gluten slurry; or
the total ozone dosage is from 1.50 g to 2.80 g ozone per litre of grain gluten or corn gluten slurry; or
the total ozone dosage is from 1.80 g to 2.50 g ozone per litre of grain gluten or corn gluten slurry.

**7.** The method of any preceding claim, wherein during step (b) liquid or dry antifoaming agents are added as required to prevent foaming during the addition of gas to the grain gluten or corn gluten slurry, optionally wherein liquid antifoams are added during step (b).

**8.** The method of any preceding claim, wherein the temperature of the grain gluten or corn gluten slurry in step (b) is from 10 to 30°C, optionally wherein:

the temperature of the grain gluten or corn gluten slurry in step (b) is from 20 to 28°C; or
the temperature of the grain gluten or corn gluten slurry in step (b) is 27°C.

**9.** The method of any preceding claim, wherein the grain gluten or corn gluten slurry is contaminated with greater than or equal to 20 parts per billion (ppb) aflatoxin, optionally wherein:

the grain gluten or corn gluten slurry is contaminated with from 30 ppb to 100 ppb aflatoxin; or
the grain gluten or corn gluten slurry is contaminated with from 40 to 50 ppb aflatoxin.

**10.** The method of any preceding claim, wherein the dry solids component of the grain gluten or corn gluten slurry is contaminated with from 100 to 500 ppb aflatoxin; and/or.
wherein the grain gluten or corn gluten slurry prepared in step (b) contains less than 1 ppb aflatoxin.

**11.** The method of any preceding claim, wherein the treatment of the grain gluten or corn gluten slurry with ozone in step (b) lasts from 15 minutes to 3 hours, optionally wherein the treatment of the grain gluten or corn gluten slurry with ozone in step (b) lasts from 30 minutes to 2 hours.

**12.** The method of any preceding claim, wherein the liquid component of the slurry is water.

**13.** The method of any preceding claim, wherein the grain gluten or corn gluten produced by wet-milling is not dried prior to preparing the grain gluten or corn gluten slurry in step (a).

**Patentansprüche**

**1.** Verfahren zum Reduzieren von Aflatoxin in einem Getreidegluten oder Maisgluten, wobei das Verfahren die Schritte umfasst des:

(a) Nassmahlens von mit Aflatoxin kontaminierten Körnern oder Maiskörnern, um Getreidegluten oder Maisgluten herzustellen, und Zubereitens einer Getreidegluten- oder Maisglutenaufschlämmung; und
(b) Behandelns der Getreidegluten- oder Maisglutenaufschlämmung mit Ozon;

wobei die Temperatur der Getreidegluten- oder Maisglutenaufschlämmung in Schritt (b) 10 bis 60 °C beträgt;
wobei die Getreidegluten- oder Maisglutenaufschlämmung 10 Gew.-% bis 20 Gew.-% trockene Feststoffe pro Liter enthält; und

wobei die Getreidegluten- oder Maisglutenaufschlämmung aus einem nassgemahlenen Anteil von Getreidegluten oder Maisgluten hergestellt wird.

2. Verfahren nach Anspruch 1, wobei das Getreidegluten ein Gluten ist, das von einem Getreide abgeleitet ist ausgewählt aus der Gruppe bestehend aus Hafer, Reis, Gerste, Weizen, Dinkel und Roggen; oder
wobei das Verfahren sich auf Maisgluten bezieht.

3. Verfahren nach einem der vorhergehenden Ansprüche, wobei der Schritt (b) durch Hindurchperlen von Ozongas durch die Getreidegluten- oder Maisglutenaufschlämmung ausgeführt wird.

4. Verfahren nach einem der vorhergehenden Ansprüche, wobei die resultierende Getreidegluten- oder Maisglutenaufschlämmung weniger als 300 Teile pro Milliarde Aflatoxin, wie durch den Gehalt an Aflatoxin B1 unter Anwendung von LC/MS gemessen, aufweist, wobei wahlweise:

die resultierende Getreidegluten- oder Maisglutenaufschlämmung weniger als 200 Teile pro Milliarde Aflatoxin, wie durch den Gehalt an Aflatoxin B1 unter Anwendung von LC/MS gemessen, aufweist; oder
die resultierende Getreidegluten- oder Maisglutenaufschlämmung weniger als 100 Teile pro Milliarde Aflatoxin, wie durch den Gehalt an Aflatoxin B1 unter Anwendung von LC/MS gemessen, aufweist; oder
die resultierende Getreidegluten- oder Maisglutenaufschlämmung weniger als 20 Teile pro Milliarde Aflatoxin, wie durch den Gehalt an Aflatoxin B1 unter Anwendung von LC/MS gemessen, aufweist.

5. Verfahren nach einem der vorhergehenden Ansprüche, wobei die Getreidegluten- oder Maisglutenaufschlämmung 15 Gew.-% trockene Feststoffe pro Liter enthält.

6. Verfahren nach einem der vorhergehenden Ansprüche, wobei die gesamte Ozondosis bis zu 6,6 g Ozon pro Liter Getreidegluten- oder Maisglutenaufschlämmung beträgt, wobei wahlweise:

die gesamte Ozondosis bis zu 3,3 g Ozon pro Liter Getreidegluten- oder Maisglutenaufschlämmung beträgt; oder
die gesamte Ozondosis 1,50 g bis 2,80 g pro Liter Getreidegluten- oder Maisglutenaufschlämmung beträgt; oder
die gesamte Ozondosis 1,80 g bis 2,50 g Ozon pro Liter Getreidegluten- oder Maisglutenaufschlämmung beträgt.

7. Verfahren nach einem der vorhergehenden Ansprüche, wobei, während Schritt (b), flüssige oder trockene Antischaummittel wie erforderlich zugegeben werden, um das Schäumen während der Zugabe von Gas zu der Getreidegluten- oder Maisglutenaufschlämmung zu verhindern, wobei wahlweise flüssige Antischaummittel während Schritt (b) zugegeben werden.

8. Verfahren nach einem der vorhergehenden Ansprüche, wobei die Temperatur der Getreidegluten- oder Maisglutenaufschlämmung in Schritt (b) 10 bis 30 °C beträgt, wobei wahlweise:

die Temperatur der Getreidegluten- oder Maisglutenaufschlämmung in Schritt (b) 20 bis 28 °C beträgt; oder
die Temperatur der Getreidegluten- oder Maisglutenaufschlämmung in Schritt (b) 27 °C beträgt.

9. Verfahren nach einem der vorhergehenden Ansprüche, wobei die Getreidegluten- oder Maisglutenaufschlämmung mit mehr als oder gleich 20 Teilen pro Milliarde (ppb) Aflatoxin kontaminiert ist, wobei wahlweise:

die Getreidegluten- oder Maisglutenaufschlämmung mit 30 ppb bis 100 ppb Aflatoxin kontaminiert ist; oder
die Getreidegluten- oder Maisglutenaufschlämmung mit 40 ppb bis 50 ppb Aflatoxin kontaminiert ist.

10. Verfahren nach einem der vorhergehenden Ansprüche, wobei die trockene Feststoffkomponente der Getreidegluten- oder Maisglutenaufschlämmung mit 100 bis 500 ppb Aflatoxin kontaminiert ist; und/oder
wobei die in Schritt (b) hergestellte Getreidegluten- oder Maisglutenaufschlämmung weniger als 1 ppb Aflatoxin enthält.

11. Verfahren nach einem der vorhergehenden Ansprüche, wobei die Behandlung der Getreidegluten- oder Maisglutenaufschlämmung mit Ozon in Schritt (b) 15 Minuten bis 3 Stunden dauert, wobei wahlweise die Behandlung der Getreidegluten- oder Maisglutenaufschlämmung mit Ozon in Schritt (b) 30 Minuten bis 2 Stunden dauert.

12. Verfahren nach einem der vorhergehenden Ansprüche, wobei die flüssige Komponente der Aufschlämmung Wasser ist.

**13.** Verfahren nach einem der vorhergehenden Ansprüche, wobei das Getreidegluten oder Maisgluten, das durch Nassmahlen hergestellt wird, vor Herstellen der Getreidegluten- oder Maisglutenaufschlämmung in Schritt (a) nicht getrocknet wird.

**Revendications**

**1.** Procédé de réduction de l'aflatoxine dans un gluten de céréale ou un gluten de maïs, le procédé comprenant les étapes de:

(a) broyage à l'état humide des grains contaminés par une aflatoxine ou des grains de maïs pour produire du gluten de céréale ou du gluten de maïs, et la préparation d'une suspension de gluten de céréale ou de gluten de maïs; et
(b) le traitement de la suspension de gluten de céréale ou de gluten de maïs avec de l'ozone;

la température de la suspension de gluten de céréale ou de gluten de maïs dans l'étape (b) étant de 10 à 60°C;
la suspension de gluten de céréale ou de gluten de maïs contenant de 10 % en pds à 20 % en pds de matières sèches solides par litre; et
la suspension de gluten de céréale ou de gluten de maïs étant préparée à partir d'une fraction broyée à l'état humide de gluten de céréale ou de gluten de maïs.

**2.** Procédé selon la revendication 1, le gluten de céréale étant un gluten dérivé d'une céréale sélectionnée dans le groupe constitué des avoines, du riz, de l'orge, du blé, de l'épeautre et du seigle; ou
le procédé concernant le gluten de maïs.

**3.** Procédé selon l'une quelconque des revendications précédentes, l'étape (b) étant effectuée par barbotage de gaz ozone à travers la suspension de gluten de céréale ou de gluten de maïs.

**4.** Procédé selon l'une quelconque des revendications précédentes, la suspension résultante de gluten de céréale ou de gluten de maïs présentant moins de 300 parties par milliard d'aflatoxine, telle que mesurée selon la teneur de l'aflatoxine B1 en utilisant la CL/SM, optionnellement où:

la suspension résultante de gluten de céréale ou de gluten de maïs présente moins de 200 parties par milliard d'aflatoxine, telle que mesurée selon la teneur de l'aflatoxine B1 en utilisant la CL/SM; ou
la suspension résultante de gluten de céréale ou de gluten de maïs présente moins de 100 parties par milliard d'aflatoxine, telle que mesurée selon la teneur de l'aflatoxine B1 en utilisant la CL/SM; ou
la suspension résultante de gluten de céréale ou de gluten de maïs présente moins de 20 parties par milliard d'aflatoxine, telle que mesurée selon la teneur de l'aflatoxine B1 en utilisant la CL/SM.

**5.** Procédé selon l'une quelconque des revendications précédentes, dans lequel la suspension de gluten de céréale ou de gluten de maïs contient 15 % en pds de matières sèches solides par litre.

**6.** Procédé selon l'une quelconque des revendications précédentes, dans lequel la dose totale d'ozone atteint jusqu'à 6,6 g d'ozone par litre de suspension de gluten de céréale ou de gluten de maïs, optionnellement où:

la dose totale d'ozone atteint jusqu'à 3,3 g d'ozone par litre de la suspension de gluten de céréale ou de gluten de maïs; ou
la dose totale d'ozone est de 1,50 g à 2,80 g d'ozone par litre de la suspension de gluten de céréale ou de gluten de maïs; ou
la dose totale d'ozone est de 1,80 g à 2,50 g d'ozone par litre de la suspension de gluten de céréale ou de gluten de maïs.

**7.** Procédé selon l'une quelconque des revendications précédentes, dans lequel durant l'étape (b) des agents antimousse liquides ou secs sont ajoutés tel que requis pour empêcher la formation de mousse durant l'addition de gaz à la suspension de gluten de céréale ou de gluten de maïs, optionnellement où des agents antimousse liquides sont ajoutés durant l'étape (b).

**8.** Procédé selon l'une quelconque des revendications précédentes, la température de la suspension de gluten de céréale ou de gluten de maïs dans l'étape (b) étant de 10 à 30°C, optionnellement où:

la température de la suspension de gluten de céréale ou de gluten de maïs dans l'étape (b) est de 20 à 28°C; ou
la température de la suspension de gluten de céréale ou de gluten de maïs dans l'étape (b) est de 27°C.

**9.** Procédé selon l'une quelconque des revendications précédentes, dans lequel la suspension de gluten de céréale ou de gluten de maïs est contaminée avec une quantité supérieure ou égale à 20 parties par milliard (ppb) d'aflatoxine, optionnellement où:

la suspension de gluten de céréale ou de gluten de maïs est contaminée avec de 30 ppb à 100 ppb d'aflatoxine; ou
la suspension de gluten de céréale ou de gluten de maïs est contaminée avec de 40 à 50 ppb d'aflatoxine.

**10.** Procédé selon l'une quelconque des revendications précédentes, dans lequel le composant de matières sèches solides de la suspension de gluten de céréale ou de gluten de maïs est contaminé avec de 100 à 500 ppb d'aflatoxine; et/ou,
la suspension de gluten de céréale ou de gluten de maïs préparée dans l'étape (b) contient moins de 1 ppb d'aflatoxine.

**11.** Procédé selon l'une quelconque des revendications précédentes, le traitement de la suspension de gluten de céréale ou de gluten de maïs avec l'ozone dans l'étape (b) durant de 15 minutes à 3 heures, optionnellement le traitement de la suspension de gluten de céréale ou de gluten de maïs avec l'ozone dans l'étape (b) durant de 30 minutes à 2 heures.

**12.** Procédé selon l'une quelconque des revendications précédentes, le composant liquide de la suspension étant l'eau.

**13.** Procédé selon l'une quelconque des revendications précédentes, le gluten de céréale ou le gluten de maïs produit par broyage à l'état humide n'étant pas séché avant la préparation de la suspension de gluten de céréale ou de gluten de maïs dans l'étape (a).

FIG. 1

FIG. 2

Ozone Concentration

FIG. 3

Ozone Production

Test was performed at 72°F, Generator was ON for more than 1 hour.
Ozone Analyzer API 454

FIG. 4

Ozone Treatment of Gluten Slurry

FIG. 5

Ozone treatment of gluten slurry, Example 7

$y = -5.6644x + 19.776$
$R^2 = 0.8628$

FIG. 6

Aflatoxin remaining, ozone-treated gluten slurry,
combined data

$y = -150.58x + 254.98$
$R^2 = 0.9778$

FIG. 7

Rate of aflatoxin inactivation compared to rate of killing of bacteria by ozone in gluten slurry

FIG. 8

Rate of inactivation of aflatoxin and living microbes by ozone (air feed) in gluten slurry

FIG. 9

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4747979 A
- US 4062984 A
- US 4055674 A
- US 6058940 A
- US 7273628 B
- US 4035518 A
- US RE30386 E
- US 5082679 A
- US 8221807 B
- US 6045834 A
- US 5149549 A
- US 5639492 A
- US 4931398 A
- US 5549890 A
- US 5844121 A
- US 5942661 A
- US 7452561 B
- US 7494589 B
- US 6417423 B
- US 6653519 B
- US 6500639 B
- US 7671242 B
- US 7695751 B
- US 3592641 A
- US 6066348 A
- US 6294211 B
- US 6120822 A
- US 5431939 A
- US 4549477 A
- US 4376130 A
- US 5213759 A
- US 5011699 A
- US 5227184 A
- US 4849237 A
- US 5087466 A
- US 7943804 B
- US 20100240933 A
- WO 2011087853 A
- WO 2011087856 A
- WO 0205665 A1
- WO 2008084407 A2

**Non-patent literature cited in the description**

- **BOUTRIF, E.** Prevention of aflatoxin in pistachios. *Food, nutrition and agriculture,* 1998, vol. 21
- **DOLLEAR et al.** *Journal of the American Oil Chemists' Society,* 1968, vol. 45 (12), 862-865
- **MCDONOUGH et al.** *Journal of Stored Products Research,* 2011, vol. 47 (249), e254
- **PRUDENTE JR. et al.** *Journal of Food Science,* 2002, vol. 67 (8), 2866
- **MCKENZIE, K.S. et al.** *Food and Chemical Toxicology,* 01 August 1997, vol. 35 (8), 807-820